# FASCICULE DE BREVET EUROPEEN

(11) **EP 2 858 887 B1**
(45) Date de publication et mention de la délivrance du brevet: **20.04.2016**
(21) Numéro de dépôt: 13741803.4
(22) Date de dépôt: 12.06.2013
(51) Int. Cl.: B63B 21/18

(54) **DISPOSITIF ARRÊT DE CHAÎNE DE MOUILLAGE ET SYSTÈME D'AMARRAGE EN MER D'UNE STRUCTURE FLOTTANTE INTÉGRANT UN TEL DISPOSITIF**
VORRICHTUNG ZUM STOPPEN EINER VERTÄUUNGSKETTE SOWIE VERFAHREN ZUR OFFSHORE-VERTÄUUNG EINER SCHWIMMFÄHIGEN STRUKTUR MIT DER DARIN EINGEBAUTEN VORRICHTUNG
ANCHOR CHAIN STOPPER DEVICE AND OFFSHORE MOORING SYSTEM FOR A FLOATING STRUCTURE COMPRISING SUCH A DEVICE

(30) Priorité: 12.06.2012 FR 1255475
(43) Date de publication de la demande: 15.04.2015
(73) Titulaire: Contrôle Mesure Régulation, 13013 Marseille (FR)
(72) Inventeur: DUGAS, Benoit, F-13013 Marseille (FR); LAUTIER, Jean-Claude, F-13013 Marseille (FR)
(74) Mandataire: Roman, Alexis
(86) Numéro de dépôt international: PCT/FR2013/051367
(87) Numéro de publication internationale: WO 2013/186488

(56) Documents cités:
- US-A- 3 613 517
- US-A- 4 425 056
- US-A1- 2003 155 564
- US-A1- 2010 175 604

## Description

### Domaine technique de l'invention.

La présente invention a pour objet un dispositif arrêt de chaîne (couramment dénommé par le terme anglais « Chain Stopper ») ainsi qu'un système d'amarrage en mer d'une structure flottante intégrant un tel dispositif.

L'invention concerne le domaine technique des dispositifs permettant de bloquer les chaînes de mouillage pour l'amarrage au fond de la mer de structures flottantes telles que les plates-formes de forage.

### État de la technique.

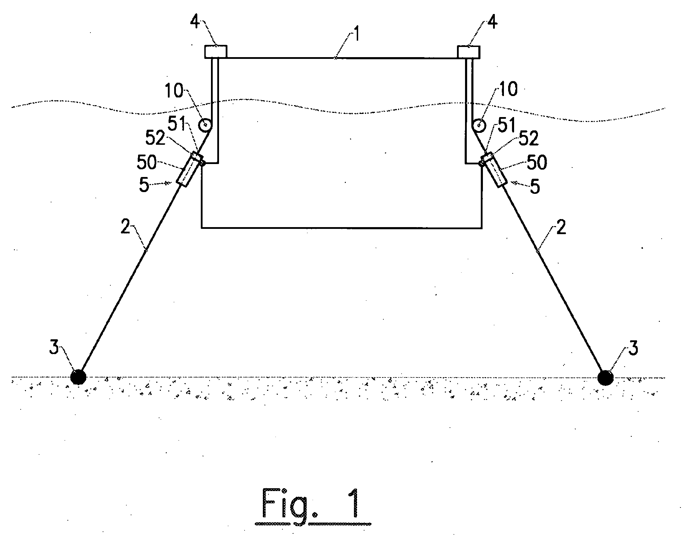

En se rapportant à la figure 1, un système d'amarrage en mer d'une structure flottante 1 (par exemple du type plate-forme, navire de forage, éolienne, ...) comprend généralement au moins une chaîne de mouillage 2 (ou ligne d'ancrage) formant connexion entre ladite structure flottante et un point d'ancrage 3 dans le fond marin. En pratique, la structure flottante 1 est pourvue d'une multitude de chaînes de mouillage 2. Ces dernières sont essentielles au maintien en position de la structure 1 ainsi qu'au bon fonctionnement du process de production qui doit être peu sollicité par les mouvements de ladite structure induits par les vents, les vagues, les marées ou les courants.

Lorsque la chaîne de mouillage 2 est raccordée au point d'ancrage 3, un dispositif de halage 4 installé sur la structure flottante 1, permet de mettre en tension ladite chaîne. En pratique, la valeur de cette prétention de la chaîne 2 correspond à un pourcentage prédéterminé de la charge de rupture de ladite chaîne. Lorsque cette valeur est atteinte, la chaîne 2 est verrouillée dans sa position par l'intermédiaire d'un dispositif arrêt de chaîne 5, communément appelé par le terme anglais « Chain Stopper ».

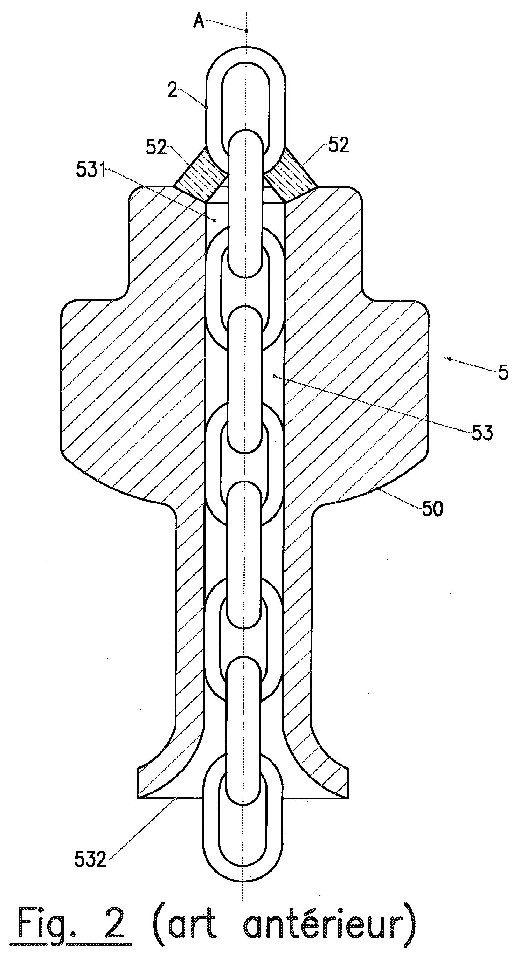

Dans une installation typique, le dispositif arrêt de chaîne 5 est installé au-dessous du dispositif de halage 4. Une ou plusieurs poulies 10 peuvent être prévues entre l'arrêt de chaîne 5 et le dispositif de halage 4. En se rapportant à la figure 2, l'arrêt de chaîne 5 comporte généralement un boîtier de verrouillage 50 pourvu d'un conduit 53 à l'intérieur duquel la chaîne 2 est susceptible de coulisser. Ce boîtier 50 est relié à la structure flottante 1 par un moyen de liaison 51 (visible sur la figure 1), du type palonnier, rotule ou tout autre système d'articulation, configuré pour orienter l'axe dudit conduit dans l'axe de tension A de la chaîne 2. De cette manière, cette dernière travaille systématiquement en traction et non en flexion. Pour bloquer la chaîne 2 en position, le boîtier 50 intègre des verrous 52 s'opposant au coulissement de ladite chaîne dans ledit conduit. Généralement, ces verrous 52 s'engagent sur un maillon de la chaîne 2 pour le maintenir en position. Le blocage de la chaîne 2 est en principe unidirectionnel, les verrous 52 empêchant seulement la portion de chaîne située entre le dispositif de halage 6 et l'arrêt de chaîne 5, de pénétrer dans le boîtier 50.

Etant donné que la mise en place des chaînes de mouillage 2 est complexe, il est important de veiller à ce qu'elles ne rompent pas sous l'effet d'une contrainte excessive due aux déplacements de la structure flottante 1 induits par les vents, les vagues, les marées ou les courants. La rupture d'une chaîne de mouillage est susceptible de déstabiliser la structure flottante 1, de détériorer les outils de forage ou les conduites de pompage et donc d'arrêter la production. Pour éviter cela, les dispositifs arrêt de chaîne comprennent généralement un moyen pour mesurer la tension dans la chaîne de mouillage. Il est préférable que ce moyen mesure la tension dans l'axe de tension de la chaîne de mouillage, mais sans être en contact direct avec ladite chaîne pour éviter toute sollicitation excessive.

Dans le document brevet EP 0.966.396 (BARDEX ENGINEERING), le moyen de mesure est un extensomètre associé au boîtier de verrouillage. Plus précisément, cet extensomètre est fixé sur la paroi externe du boîtier, dans l'axe du conduit, c'est-à-dire dans l'axe de tension de la chaîne. Cette solution technique n'est pas totalement satisfaisante. En effet, l'extensomètre est en contact direct avec le milieu extérieur, et notamment la mer et les embruns, de sorte qu'une attention toute particulière doit être apportée à son étanchéité pour éviter la détérioration des composants électroniques. Un autre inconvénient réside dans le fait qu'il suffit d'un mouvement brusque de la chaîne de mouillage, pour que le boîtier de verrouillage vienne buter violemment contre la structure flottante et se détériore. Encore un autre inconvénient est lié à la nécessité de ré-étalonner régulièrement l'extensomètre.

Dans le document brevet US 2010/0175604 (BOATMAN), le moyen de mesure consiste : - soit en une jauge de contrainte placée sur le boitier de verrouillage ; - soit en une cellule de mesure placée entre les verrous et un guide sur lequel repose lesdits verrous ; - soit en un capteur sans contact placé au niveau d'un bloc-tourillon. L'utilisation d'une jauge de contrainte ou d'un capteur sans contact, induis les mêmes désavantages que ceux cités au paragraphe précédent. La cellule de mesure est du type « standard », et par exemple décrite dans les documents brevets GB 2475081 (ILLINOIS TOOL WORKS) ou CA2019143 (MCKENNA).

Dans le document brevet US 2003/0155564 (FONTENOT), le moyen de mesure est un capteur électronique ou un capteur sans contact qui engendre également des problèmes de fiabilité et d'étalonnage.

Le document brevet US 3.613.517 (BRADLEY) divulgue une cellule pour la mesure des efforts de tension. Cette cellule se présente sous la forme d'un piston annulaire comprenant un élément cylindrique monté de manière télescopique dans un élément de base. L'espace entre ces deux éléments est rempli de fluide. Lorsqu'une force est exercée sur l'élément mobile, le fluide contenu dans l'espace se comprime. La mesure de la pression de ce fluide permet de déduire l'intensité de la force exercée sur l'élément mobile. Ce type de cellule est complexe à réaliser et nécessite de gérer des problèmes d'étanchéité, notamment en utilisant une membrane souple. Dans la pratique, cette membrane est particulièrement fragile et ne peut être mise en contact direct avec la mer ou les embruns, le sel risquant de la détériorer de manière irréversible. La cellule BRADLEY est donc inadaptée pour mesurer la tension d'une chaîne de mouillage.

Face à cet état des choses, un objectif de l'invention est de sécuriser la prise de mesure de la tension dans une chaîne de mouillage.

Un autre objectif de l'invention est de fiabiliser sur des durée de vie de plusieurs années la prise de mesure de la tension dans une chaîne de mouillage.

Un autre objectif de l'invention est d'améliorer la précision de la mesure de la tension dans une chaîne de mouillage.

Encore un autre objectif de l'invention est de proposer un moyen de mesure de la tension d'une chaîne de mouillage de conception simple et dont l'installation dans un dispositif arrêt de chaîne est aisée.

Un objectif supplémentaire de l'invention est d'améliorer la sécurité dans un système d'amarrage en mer d'une structure flottante.

### Divulgation de l'invention.

La solution proposée par l'invention est un dispositif arrêt de chaîne de mouillage du type décrit précédemment, comportant notamment :
- un boîtier de verrouillage pourvu d'un conduit à l'intérieur duquel une chaîne de mouillage est apte à coulisser, ledit boîtier comprenant un moyen de liaison à une structure flottante configurée pour orienter l'axe dudit conduit dans l'axe de tension de ladite chaîne, ledit boîtier intégrant des verrous configurés pour s'opposer au coulissement de ladite chaîne dans ledit conduit,
- un moyen pour mesurer la tension dans ladite chaîne de mouillage, ledit moyen de mesure étant intégré audit boîtier de verrouillage.

Ce dispositif est remarquable en ce que le moyen de mesure comprend :
- au moins une chambre constituée d'une enveloppe fermée déformable, laquelle chambre est remplie d'un liquide,
- au moins une pièce d'appui montée mobile dans le boîtier de verrouillage, ladite pièce d'appui étant placée entre les verrous et la chambre, ladite pièce d'appui agissant sur la paroi de l'enveloppe de ladite chambre pour mettre en pression le liquide qu'elle contient, ladite pièce d'appui étant agencée de manière à ce que les efforts exercés par ladite chaîne de mouillage sur lesdits verrous entrainent le déplacement de ladite pièce d'appui et la mise en pression de ladite chambre,
- au moins un capteur de pression configuré pour mesurer la pression du liquide dans ladite chambre fermée.

L'utilisation d'une telle chambre fermée déformable comme élément de mesure de force, évite l'utilisation de composants électroniques relativement fragiles et donc supprime tout problème lié à la protection étanche du moyen de mesure. En outre, du fait de sa conception simple et de son étanchéité intrinsèque, cette chambre est peu onéreuse à fabriquer, simple à utiliser et ne nécessite aucune maintenance particulière dans un milieu hostile tel que le milieu marin.

De plus, étant donné, d'une part que le déplacement de la pièce d'appui est très faible en raison de la quasi incompressibilité du fluide contenu dans la chambre fermée, et d'autre part que l'enveloppe de cette chambre est suffisamment souple pour être déformable sans effort notable, la pression exercée par ladite pièce sur la chambre fermée est directement proportionnelle à l'effort de tension de ladite chaîne. Le déplacement, infime, de la pièce d'appui dépend directement de l'effort exercé par la chaîne de mouillage sur les verrous. On obtient donc une très grande précision de la mesure de la tension dans la chaîne.

D'autres caractéristiques remarquables du dispositif arrêt de chaîne objet de l'invention sont listées ci-dessous, chacune de ces caractéristiques pouvant être considérée seule ou en combinaison, indépendamment des caractéristiques remarquables définies ci-dessus :
- Les verrous agissent préférentiellement directement sur la pièce d'appui, cette dernière étant configurée pour reporter, sur la paroi de l'enveloppe de la chambre fermée déformable, les efforts exercés par la chaîne de mouillage sur lesdits verrous.
- L'enveloppe de la chambre est préférentiellement plus épaisse au niveau de la paroi sur laquelle agit la pièce d'appui.
- L'enveloppe de la chambre fermée déformable peut se présenter sous la forme d'un corps annulaire fermé disposé à l'intérieur ou autour du conduit du boîtier de verrouillage de manière à ce que l'axe dudit corps soit coaxial à l'axe dudit conduit.
- Dans une autre variante de réalisation, l'enveloppe de la chambre fermée déformable se présente sous la forme d'un corps annulaire ouvert disposé à l'intérieur ou autour du conduit du boîtier de verrouillage de manière à ce que l'axe dudit corps annulaire soit coaxial à l'axe dudit conduit, l'ouverture dudit corps annulaire étant dimensionnée pour autoriser le passage d'un maillon de la chaîne de mouillage.
- L'enveloppe de la chambre fermée déformable est avantageusement plate, la hauteur de la section du corps annulaire étant inférieure à la largeur de ladite section.
- L'enveloppe de la chambre est avantageusement formée par deux tôles embouties identiques, présentant chacune un épaulement interne et un épaulement externe, ladite chambre étant obtenue en agençant les deux tôles en vis-à-vis et en soudant et/ou en rivetant les épaulements internes et externes.
- La pièce d'appui peut se déplacer dans le boîtier de verrouillage de manière à exercer, sur la paroi de l'enveloppe de la chambre fermée, un effort de pression orienté selon une direction parallèle à l'axe du conduit.
- Dans une variante de réalisation, la pièce d'appui se déplace dans le boîtier de verrouillage de manière à exercer, sur la paroi de l'enveloppe de la chambre fermée, un effort de pression orienté selon une direction perpendiculaire à l'axe du conduit.
- Avantageusement, au moins trois points de mesure de la pression sont répartis de manière homogène sur la paroi de l'enveloppe de la chambre fermée.
- L'enveloppe de la chambre fermée déformable peut comprendre au moins un évent permettant de dégazer ladite chambre lors de son remplissage par le liquide.
- La chambre est préférentiellement remplie avec un liquide sous pression de manière à maintenir une pression résiduelle dans ladite chambre après son remplissage.
- Dans une variante de réalisation, le moyen de mesure comprend plusieurs chambres constituées d'enveloppes fermées déformables, chacune des enveloppes de ces chambres pouvant se présenter sous la forme d'une portion de corps annulaire disposé à l'intérieur ou autour du conduit du boîtier.

Un autre aspect de l'invention concerne un système d'amarrage en mer d'une structure flottante comprenant :
- au moins une chaîne de mouillage destinée à former connexion entre ladite structure flottante et un point d'ancrage dans le fond marin,
- un dispositif arrêt de chaîne positionné sur ladite structure flottante, ledit dispositif comportant un boîtier de verrouillage pourvu d'un conduit à l'intérieur duquel ladite chaîne de mouillage coulisse, ledit boîtier étant relié à ladite structure flottante par un moyen de liaison configuré pour orienter l'axe dudit conduit dans l'axe de tension de ladite chaîne, ledit boîtier intégrant des verrous s'opposant au coulissement de ladite chaîne dans ledit conduit,
- un moyen pour mesurer la tension dans ladite chaîne de mouillage, ledit moyen de mesure étant associé audit boîtier de verrouillage.

Ce système est remarquable en ce que le moyen de mesure comprend :
- au moins une chambre constituée d'une enveloppe fermée déformable, laquelle chambre est remplie d'un liquide,
- au moins une pièce d'appui montée mobile dans ledit boîtier de verrouillage, ladite pièce d'appui étant placée entre les verrous et la chambre, ladite pièce d'appui agissant sur la paroi de l'enveloppe de ladite chambre pour mettre en pression le liquide qu'elle contient, ladite pièce d'appui étant agencée de manière à ce que les efforts exercés par ladite chaîne de mouillage sur lesdits verrous entrainent le déplacement de ladite pièce d'appui et la mise en pression de ladite chambre,
- au moins un capteur de pression configuré pour mesurer la pression du liquide dans ladite chambre fermée.

Selon une caractéristique avantageuse de ce système, les verrous agissent directement sur la pièce d'appui, cette dernière étant configurée pour reporter, sur la paroi de l'enveloppe de la chambre fermée déformable et dans l'axe de tension de la chaîne de mouillage, les efforts exercés par ladite chaîne sur lesdits verrous.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 précitée schématise une structure flottante équipée d'un système d'amarrage en mer,
- la figure 2 précitée est une vue en coupe d'un dispositif arrêt de chaîne connue de l'art antérieur,
- la figure 3 est une vue en coupe d'un dispositif arrêt de chaîne conforme à l'invention, selon un mode préféré de réalisation,
- la figure 4 est une vue en coupe d'une chambre fermée déformable selon l'invention, dans une forme préférée de réalisation,
- la figure 5 est une vue de haut de la chambre fermée déformable selon la figure 4,
- la figure 6A, est une vue de haut d'une chambre fermée déformable selon l'invention, dans une variante de réalisation,
- la figure 6B, est une vue de haut d'un agencement de deux chambres fermées déformables selon l'invention,
- la figure 7 est une vue en coupe d'une chambre fermée déformable selon l'invention, dans une variante de réalisation,
- la figure 8 est une vue de haut de la chambre fermée déformable selon la figure 7,
- la figure 9 est une vue en coupe d'un dispositif arrêt de chaîne conforme à l'invention, dans une variante de réalisation,
- la figure 10 est une vue en coupe d'un dispositif arrêt de chaîne conforme à l'invention, dans une autre variante de réalisation.

### Modes préférés de réalisation de l'invention.

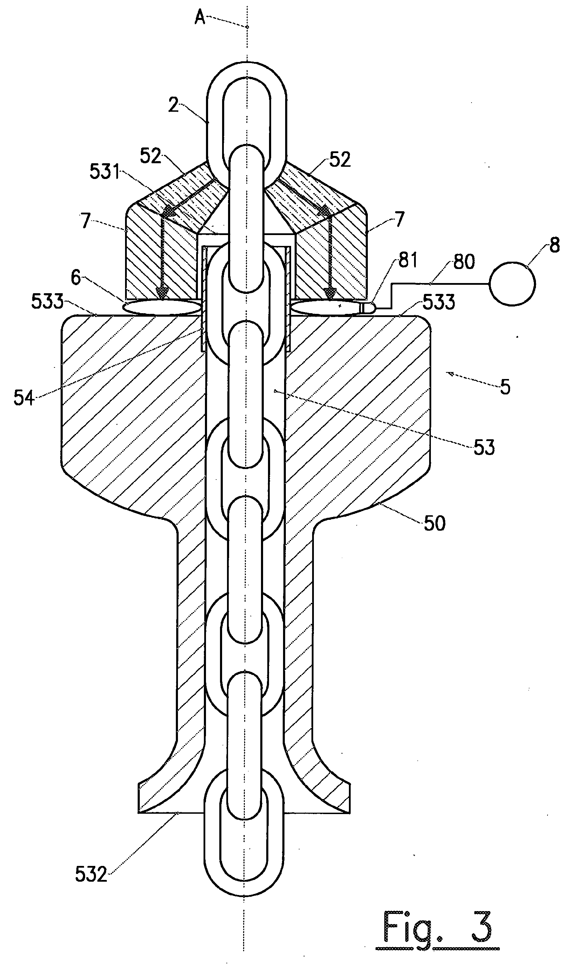

En se rapportant à la figure 3, le dispositif arrêt de chaîne 5 est du type décrit précédemment. Il comporte un boîtier de verrouillage 50 par exemple réalisé en acier inoxydable. Ce boîtier 50 comprend un conduit 53 à l'intérieur duquel passe la chaîne de mouillage 2. Le conduit 53 est configuré pour autoriser un coulissement de la chaîne 2 tout en limitant au maximum tout débattement radial de ladite chaîne dans ledit conduit. En pratique, le diamètre du conduit 53 correspond sensiblement à la largeur des maillons de la chaîne 2. Le conduit 53 est préférentiellement allongé, sa longueur étant plus grande que son diamètre. A titre d'exemple, son diamètre est compris entre 20 cm et 1 m, et sa longueur comprise entre 1 m et 2 m. L'extrémité proximale 531 du conduit 53 est pourvue de verrous 52 qui sont décrits en détail plus après dans la description. Son extrémité distale 532 forme un guidage pour limiter les frottements de la chaîne 2 à la sortie du boîtier 50. Le conduit 53 peut comporter des rainures internes dans lesquelles s'engagent les maillons de la chaîne 2, de manière à s'assurer que lesdits maillons soient correctement orientés dans ledit conduit.

Le boîtier 50 est relié à la structure flottante par un moyen de liaison présentant plusieurs axes de rotation, par exemple du type palonnier, rotule ou tout autre système d'articulation, et permettant d'orienter l'axe du conduit 53 dans l'axe de tension A de la chaîne 2. L'axe du conduit 53 coïncide donc en permanence avec l'axe de tension A de la chaîne 2. En pratique, l'extrémité distale 532 du conduit 53 est éloignée de ce système d'articulation pour s'assurer que la chaîne 2 soit uniquement sollicitée en traction dans ledit conduit, notamment au niveau des verrous 52.

Les verrous 52 sont positionnés à l'extrémité proximale 531 du conduit 53. Ils s'engagent sur au moins un des maillons de la chaîne 2 de manière à s'opposer au coulissement de ladite chaîne dans le conduit 53. La portion de chaîne située en amont des verrous 52 ne peut donc pas pénétrer à l'intérieur du conduit 53 tandis que la portion de chaîne située en aval desdits verrous peut sortir hors dudit conduit au niveau de l'extrémité 531. De fait, le blocage de la chaîne 2 est effectué selon une direction et un sens. On peut toutefois envisager d'utiliser des verrous 52 configurés pour bloquer la chaîne 2 selon une direction et deux sens.

En pratique, les verrous 52 sont articulés sur un axe et/ou montés escamotables dans le boîtier 50. Ils sont mobiles entre une position de blocage où ils viennent en prise avec au moins un maillon de la chaîne 2 (figure 3) et une position de déblocage (non représentée) où ils se désengagent dudit maillon pour laisser librement coulisser ladite chaîne dans le conduit 53. Le mécanisme d'actionnement des verrous 52 est du type connu et par exemple décrit dans le document EP 0.966.396 précité auquel l'homme du métier pourra se référer.

Conformément à l'invention, et comme cela apparait clairement sur la figure 3, une chambre constituée d'une enveloppe fermée déformable 6 remplie d'un fluide incompressible ou quasi incompressible, plus particulièrement d'un liquide, est intégrée dans le boîtier 50. Par « fermée », on entend au sens de la présente invention que la chambre 6 est étanche, le liquide ne pouvant s'écouler hors de ladite chambre lorsqu'elle se déforme. Il n'y a donc pas à gérer de problématique d'étanchéité liée à d'éventuelles fuites, contrairement aux systèmes à pistons. L'enveloppe de la chambre 6 est préférentiellement réalisée dans un matériau du type acier inox ou acier au chrome. Le liquide (c'est-à-dire d'un point de vue physique, dont le volume ne varie pas ou très peu sous l'effet de la pression) est par exemple de l'eau, de l'huile, de l'éthylène glycol, ou leur mélange. Préférentiellement, ce fluide remplit intégralement la chambre 6 de manière à supprimer tout volume d'air dans ladite chambre.

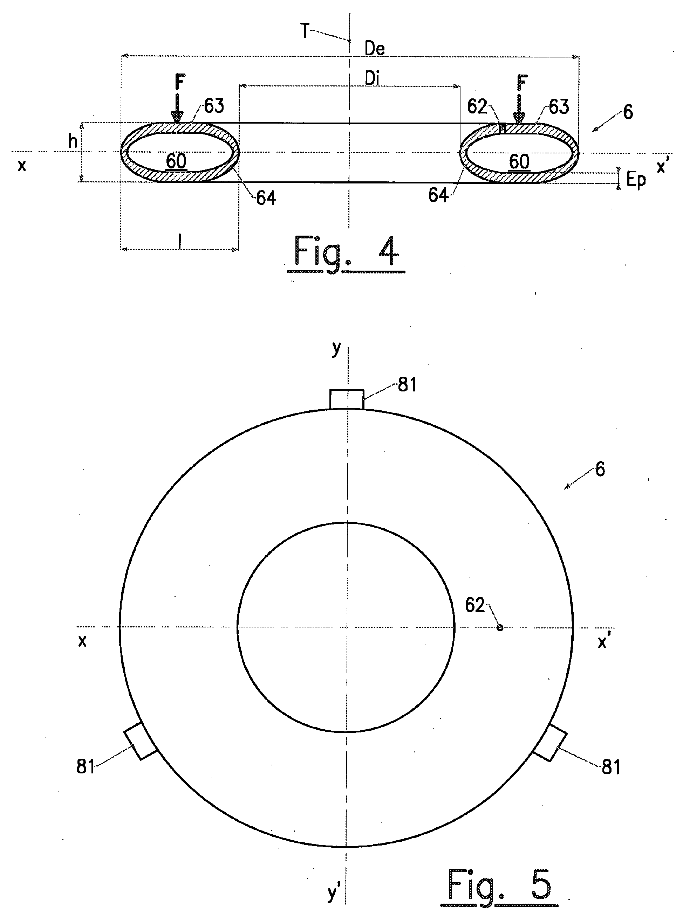

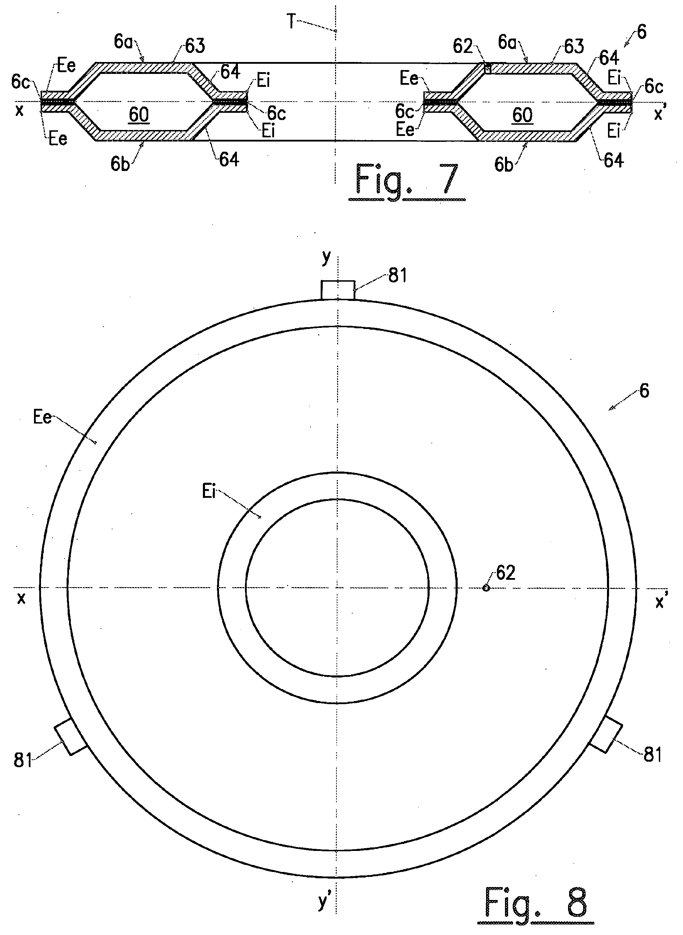

Sur les figures annexées, l'ensemble des parois de l'enveloppe de la chambre 6 sont déformables. En se rapportant aux exemples illustrés sur les figures 4 et 7, la paroi 63 sur lesquelles appuient les pièces 7, 7' est préférentiellement indéformable de manière à optimiser le transfert des efforts des pièces 7, 7' en pression à l'intérieur de la chambre 6, au moyen d'une surface d'appui de superficie constante. Cette paroi 63 peut par exemple être plus épaisse que les parois latérales 64, lesquelles parois latérales assurent la flexibilité de l'enveloppe de la chambre 6 de part leur moindre épaisseur et/ou leur configuration.

Comme illustré sur les figures 4 et 7, l'enveloppe de la chambre 6 comprend au moins un évent 62 permettant de dégazer ladite chambre lors de son remplissage par le liquide. Cet évent 62 se présente sous la forme d'un tube débouchant d'un part à l'intérieur de la chambre 6, et d'autre part à l'extérieur de ladite chambre, préférentiellement au niveau d'une zone non déformable de l'enveloppe, par exemple au niveau de paroi 63 précitée, de façon à limiter les problèmes d'étanchéité. Ce tube 62 (ainsi que celui - non représenté - utilisé pour le remplissage) est obturé au moyen d'un bouchon avec une étanchéité métal-métal, puis une fixation par soudure à faible dispersion de chaleur et éloignée du liquide. Le bouchon est configuré, par exemple en cône, pour engendrer une légère réduction du volume de la chambre 6 lorsqu'il est mis en place, et maintenir une pression résiduelle dans ladite chambre. De manière alternative ou complémentaire, la chambre 6 est avantageusement remplie avec un liquide sous pression de manière à maintenir une pression résiduelle dans ladite chambre après son remplissage. Cette pression résiduelle permet de pré-contraindre l'enveloppe de la chambre 6. Il est ainsi possible de soulager mécaniquement l'enveloppe lorsqu'elle est sous charge, la pression résiduelle s'opposant à la contrainte mécanique exercée par les pièces 7, 7'.

Selon le mode de réalisation préféré schématisé sur les figures 3, 4 et 5, l'enveloppe de la chambre 6 se présente sous la forme d'un corps annulaire fermé disposé à l'intérieur ou autour du conduit 53 de manière à ce que l'axe T dudit corps soit coaxial à l'axe dudit conduit et donc à l'axe de tension A de la chaîne 2. Le corps annulaire est préférentiellement obtenu par la rotation complète d'une courbe fermée plane (ou section) autour de l'axe T. En pratique, le boîtier 50 présente un épaulement circulaire 533 sur lequel repose l'enveloppe de la chambre 6 toroïdale. Le liquide remplit l'espace interne 60 du corps. Dans le but de limiter l'encombrement de la chambre 6, on préfère utiliser un corps annulaire plat, c'est-à-dire dont la hauteur h de la section est inférieure à sa largeur I. Dans l'exemple de réalisation des figures 4 et 5, le corps annulaire est de section sensiblement ovale, les surfaces d'appui (sur lesquelles s'exercent les efforts de tension F de la chaîne 2 et qui permettent de mettre sous pression la chambre 6) étant planes de manière à assurer un contact linéaire avec les pièces d'appui 7, 7', ou à défaut un contact plan, de préférence à superficie constante. Le corps annulaire présente un diamètre externe De variant de 40 cm à 1,5 m, un diamètre interne Dᵢ variant de 20 cm et 1 m, une hauteur h comprise entre 5 mm et 10 cm et une épaisseur Eₚ comprise entre 2 mm et 2 cm, voire supérieure à 2 cm (par exemple 4 cm) sur certaine portion du corps annulaire. En effet, cette épaisseur Ep n'est pas nécessairement constante. Au contraire, comme cela a été évoqué précédemment, l'épaisseur de la paroi 63 est préférentiellement plus importante que celle des parois latérales 64, de sorte que : - la paroi 63 ne se déforme pas, - les parois latérales 64 assurent la flexibilité de l'enveloppe. Un corps annulaire de section sensiblement ovale, réalisé en acier inoxydable, ayant un diamètre externe De d'environ 1 m, un diamètre interne Dᵢ d'environ 60 cm, une hauteur h d'environ 30 mm et une épaisseur Eₚ d'environ 10 mm, est capable d'encaisser un effort axial F d'environ 3000 tonnes. En pratique, le diamètre interne Dᵢ correspond sensiblement au diamètre du conduit 53 de manière à ce que la chaîne 2 puisse glisser à l'intérieur du corps annulaire.

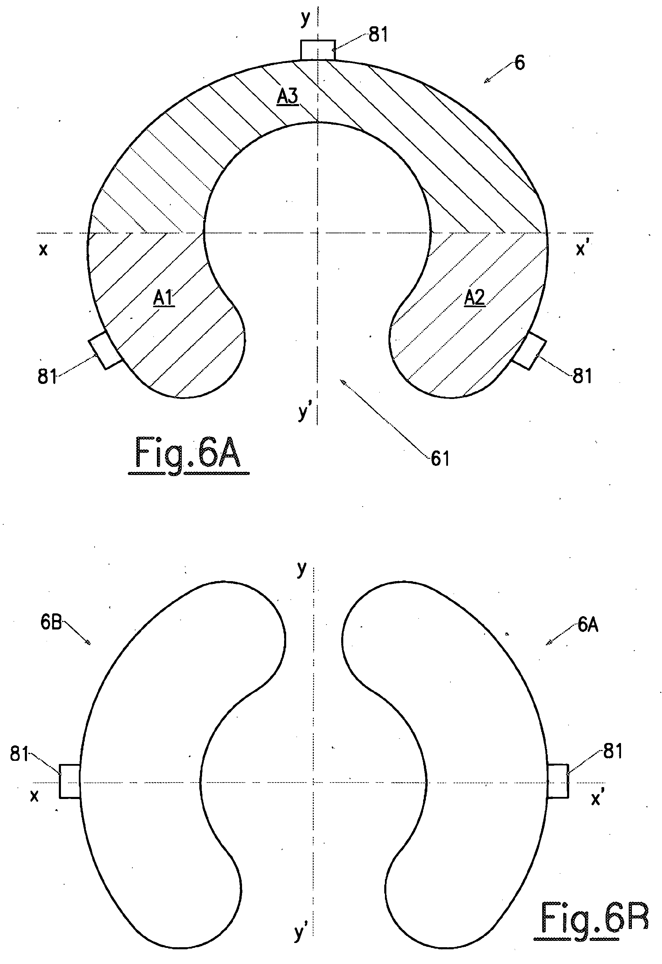

Dans la variante de réalisation de la figure 6A, l'enveloppe de la chambre 6 se présente sous la forme d'un corps annulaire ouvert, c'est-à-dire obtenu par la rotation partielle d'une courbe fermée plane (ou section) autour de l'axe T. On constate que la section de ce corps annulaire n'est pas forcément constante. En effet, il est préférable de dimensionner ce corps annulaire de sorte que les surfaces d'appui A1, A2, A3 soient relativement symétriques par rapport aux axes radiaux X-X' et Y-Y' (qui sont orthogonaux à l'axe T) et tendre à équilibrer lesdites surfaces d'appui pour que A1=A2=A3. De cette manière on s'assure une répartition correcte et homogène des efforts d'appui sur chaque surface d'appui A1, A2, A3. L'ouverture 61 est dimensionnée pour autoriser le passage d'un maillon de la chaîne 2. En pratique, l'ouverture 61 est légèrement plus large que l'épaisseur des maillons de la chaîne 2. La chambre 6 peut ainsi être facilement positionnée ou enlevée du conduit 53, tout en laissant la chaîne 2 insérée dans le boîtier 50. Comme décrit précédemment, cette portion de corps annulaire est disposée à l'intérieur ou autour du conduit 53 de manière à ce que l'axe T dudit corps annulaire soit coaxial à l'axe dudit conduit et donc à l'axe de tension A de la chaîne 2.

Dans la variante de réalisation de la figure 6B, on prévoit plusieurs chambres 6A, 6B constituées d'enveloppes fermées déformables. Chacune des enveloppes de ces chambres se présentent sous la forme d'une portion de corps annulaire disposée à l'intérieur ou autour du conduit 53 du boîtier. Sur la figure 6B, deux chambres fermées sont prévues, mais un nombre supérieur peut être envisagé. Toutes les chambres 6A, 6B sont identiques est réparties dé manière homogène dans ou autour du conduit 53. Cette conception multi-chambres facilite encore plus la mise en place du moyen de mesure dans ou atour du conduit 53 alors que la chaîne 2 est en position dans ledit conduit.

Dans la variante de réalisation des figures 7 et 8, l'enveloppe de la chambre 6 est formée par deux tôles embouties 6a, 6b identiques, présentant chacune un épaulement interne Eᵢ et un épaulement externe Eₑ. La chambre 6 est obtenue en agençant les deux tôles 6a, 6b en vis-à-vis et en soudant et/ou en rivetant les épaulements internes Eᵢ et externes Eₑ. Un joint d'étanchéité 6c peut éventuellement être inséré au niveau de la jonction des deux tôles 6a, 6b. Toutefois, une structure mécano-soudée convient parfaitement, sans qu'il soit nécessaire de prévoir une autre étanchéité spécifique. Pour les mêmes raisons que celles évoquées précédemment, les tôles 6a et/ou 6b sont plus épaisses au niveau de la paroi 63 sur laquelle agit la pièce d'appui 7, 7' qu'au niveau des parois latérales 64.

Selon une caractéristique avantageuse de l'invention, au moins une pièce d'appui 7, 7' agit sur une paroi 63 de l'enveloppe de la chambre 6 pour mettre en pression le liquide qu'elle contient. Cette pièce 7, 7' est montée mobile dans le boîtier 50. Elle est placée entre les verrous 52 et la chambre 6. Elle est agencée de manière à ce que les efforts (schématisés par les flèches en gras) exercés par la chaîne 2 sur les verrous 52 entrainent le déplacement de ladite pièce d'appui et la mise en pression de la chambre 6, en agissant sur la paroi 63 de son enveloppe. La chaîne 2 n'agit donc pas directement sur l'enveloppe de la chambre 6. En pratique, la pièce 7, 7' agit sur la paroi 63 de l'enveloppe de la chambre 6 qui a la plus grande surface.

Sur la figure 3, la pièce d'appui 7 se déplace de manière à exercer, sur la paroi 63 de l'enveloppe de la chambre 6, un effort de pression orienté selon une direction parallèle à l'axe du conduit 52 et donc parallèle à l'axe de tension A de la chaîne 2. La pièce d'appui 7 est montée coulissante selon l'axe dudit conduit et donc selon l'axe de tension A de la chaîne 2. L'enveloppe de la chambre 6 est ainsi positionnée dans le boîtier 50 de manière à ce que les efforts encaissés par les verrous 52 soient transmis à la paroi 63 selon la direction de tension de la chaîne 2. La pièce d'appui 7 peut se présenter sous la forme d'une pièce cylindrique creuse dont le diamètre interne correspond sensiblement au diamètre du conduit 53 (ou au diamètre interne de l'enveloppe de la chambre 6) et dont le diamètre externe peut correspondre au diamètre externe de ladite enveloppe. En pratique, la pièce d'appui 7 ne frotte radialement sur aucune autre pièce de manière à ne pas perturber les mesures. Une simple pièce de guidage 54 disposée dans le conduit 53, assure le centrage de la pièce d'appui 7 par rapport à l'axe de la chaîne 2 et celui dudit conduit, avec un jeu certain. La hauteur de cette pièce correspond sensiblement à la distance séparant les verrous 52 de la chambre 6. En pratique, les verrous 52 agissent directement sur l'extrémité proximale de la pièce d'appui 7. Cette extrémité proximale est biseautée de manière à ce que les efforts soient reportés dans l'axe du conduit 53 et l'axe A de tension de la chaîne 2. L'extrémité distale de la pièce 7 agit directement sur la paroi 63 de l'enveloppe de la chambre 6, laquelle chambre se déforme et met en pression le liquide qu'elle contient. Toute autre configuration de la pièce d'appui 7 permettant de reporter, sur la paroi 63 de l'enveloppe de la chambre 6 et dans l'axe du conduit 53 (ou l'axe de tension A de la chaîne 2), les efforts exercés par ladite chaîne sur les verrous 52, peut être prévue par l'homme du métier. En pratique, l'axe de rotation des verrous 52 est solidarisé sur la pièce d'appui 7 : les efforts exercés par la chaîne 2 sur lesdits verrous sont reportés dans l'axe de rotation puis dans ladite pièce d'appui. Dans une autre variante de réalisation non représentée, les verrous 52 peuvent entrainer le déplacement de la pièce d'appui 7 et la mise en pression de la chambre 6, en agissant sur une pièce intermédiaire disposée entre ladite pièce d'appui et lesdits verrous. Selon encore une autre variante de réalisation non représentée, l'axe de rotation des verrous 52 peut être directement fixé sur la paroi de l'enveloppe de la chambre 6. Dans ce dernier cas, les axes de rotation forment la pièce d'appui.

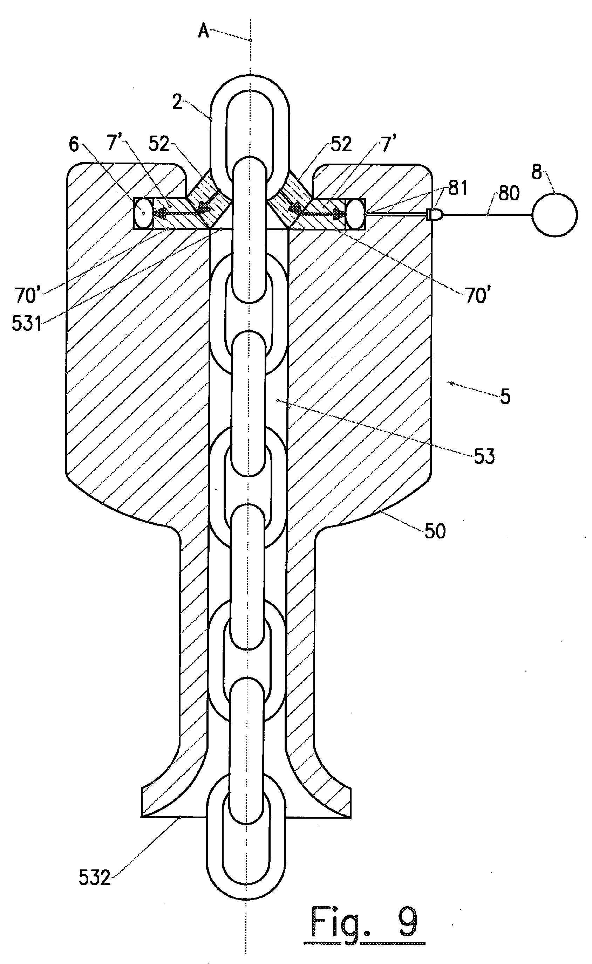

Dans une variante de réalisation illustrée sur la figure 9, la pièce d'appui 7' se déplace dans le boîtier 50 de manière à exercer, sur la paroi 63 de l'enveloppe de la chambre 6, un effort de pression orienté selon une direction perpendiculaire à l'axe du conduit 52 et donc perpendiculaire à l'axe de tension A de la chaîne 2. Pour ce faire, la pièce d'appui 7' est montée coulissante dans le conduit 53, perpendiculairement à l'axe dudit conduit et donc perpendiculairement à l'axe de tension A de la chaîne 2. L'enveloppe de la chambre 6 est ainsi positionnée dans le boîtier 50 de manière à ce que les efforts encaissés par les verrous 52 soient transmis à la paroi 63, perpendiculairement à la direction de tension de la chaîne 2. La pièce d'appui 7' peut se présenter sous la forme de plusieurs ergots se déplaçant radialement dans des logements 70' réalisés dans le boîtier 50. Ces logements débouchent dans le conduit 53, au niveau des verrous 52. L'autre extrémité est fermée et reçoit l'enveloppe de la chambre 6. Pour limiter les frottements, les logements 70' sont avantageusement pourvus de roulements. En pratique, les verrous 52 agissent directement sur l'extrémité proximale de la pièce d'appui 7'. Cette extrémité proximale est biseautée de manière à ce que les efforts soient reportés perpendiculairement à l'axe du conduit 53 et perpendiculairement à l'axe A de tension de la chaîne 2. L'extrémité distale de la pièce 7' agit directement sur la paroi 63 de l'enveloppe de la chambre 6. Toute autre configuration de la pièce d'appui 7' permettant de reporter, sur la paroi 63, perpendiculairement à l'axe du conduit 53 (ou l'axe de tension A de la chaîne 2), les efforts exercés par ladite chaîne sur les verrous 52, peut être prévue par l'homme du métier. Il est par exemple envisageable de solidariser l'axe de rotation des verrous 52 sur la pièce d'appui 7' : les efforts exercés par la chaîne 2 sur lesdits verrous sont reportés perpendiculairement à l'axe de rotation puis dans ladite pièce d'appui. Dans une autre variante de réalisation non représentée, les verrous 52 peuvent entraîner le déplacement de la pièce d'appui 7' et la mise en pression de la chambre 6, en agissant sur une pièce intermédiaire disposée entre ladite pièce d'appui et lesdits verrous. Selon encore une autre variante de réalisation non représentée, l'axe de rotation des verrous 52 peut être directement fixé sur la paroi 63 de l'enveloppe de la chambre 6. Dans ce dernier cas, les axes de rotation forment la pièce d'appui.

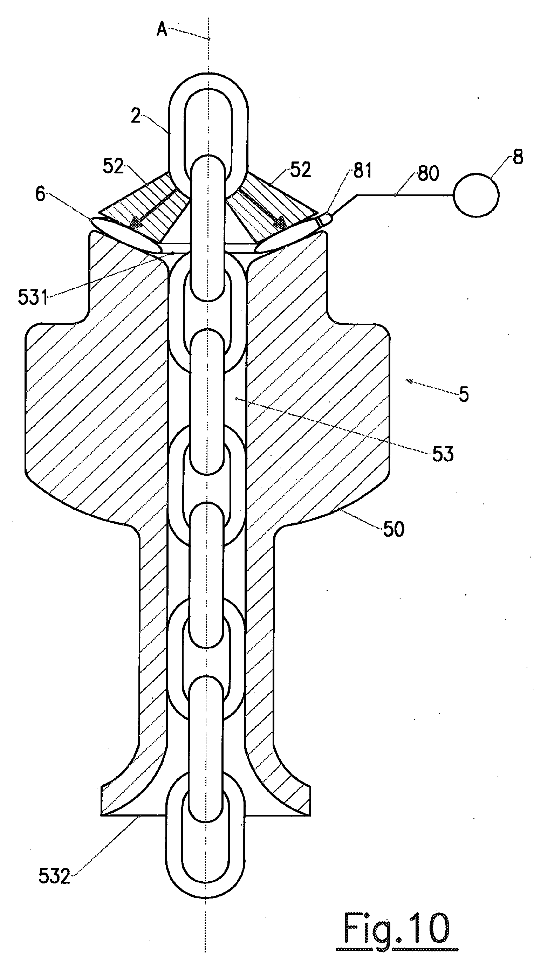

Dans une autre variante de réalisation illustrée sur la figure 10, le verrou 52 agit directement sur la paroi 63 de l'enveloppe de la chambre 6. La surface d'appui de cette dernière est orientée de sorte que l'effort de pression exercé par la chaîne 2 sur les verrous 52, soit dirigé selon une direction perpendiculaire à ladite surface d'appui.

Quels que soient la conception et l'agencement retenus pour la chambre 6, au moins un capteur de pression est configuré pour mesurer la pression du liquide dans ladite chambre. Ce capteur de pression 8 peut être intégré dans le boîtier 50 ou au contraire déporté, ou encore être logé dans l'épaisseur de la paroi 63 sur laquelle agissent les pièces d'appui 7, 7'. Il peut s'agir d'un manomètre ou d'un capteur électronique avec fil ou sans fil, configuré pour mesurer et communiquer, sans câblage et sans alimentation, la valeur de pression à un processeur externe situé par exemple sur la structure 1. On peut par exemple utiliser un transmetteur industriel avec fil du type XYR® commercialisé par la société HONYWELL®. Une ligne de pression 80 relie l'intérieur 60 de la chambre 6 au capteur 8. Il est avantageux de prévoir dans le boîtier 50 et/ou sur la paroi de l'enveloppe de la chambre 6, une connexion 81 adaptée pour assurer cette liaison entre ladite chambre et le capteur 8. Avantageusement, et comme cela apparait clairement sur les figures 5 et 8, au moins trois points 81 de mesure de la pression sont répartis de manière homogène (typiquement à 120°) sur la paroi de l'enveloppe de la chambre 6. Cette redondance permet d'avoir en permanence une mesure, même si un des capteurs 8 est en panne.

## Revendications

1. Dispositif arrêt de chaîne de mouillage comportant :
- un boîtier de verrouillage (50) pourvu d'un conduit (53) à l'intérieur duquel une chaîne de mouillage (2) est apte à coulisser, ledit boîtier comprenant un moyen de liaison (51) à une structure flottante (1) configurée pour orienter l'axe (T) dudit conduit dans l'axe de tension (A) de ladite chaîne, ledit boîtier intégrant des verrous (52) configurés pour s'opposer au coulissement de ladite chaîne dans ledit conduit,
- un moyen pour mesurer la tension dans ladite chaîne de mouillage, ledit moyen de mesure étant intégré audit boîtier de verrouillage,
**se caractérisant par le fait que** ledit moyen de mesure comprend :
- au moins une chambre (6) constituée d'une enveloppe fermée déformable, laquelle chambre est remplie d'un liquide,
- au moins une pièce d'appui (7, 7') montée mobile dans le boîtier de verrouillage (50), ladite pièce d'appui étant placée entre les verrous (52) et la chambre (6), ladite pièce d'appui agissant sur la paroi (63) de l'enveloppe de ladite chambre pour mettre en pression le liquide qu'elle contient, ladite pièce d'appui étant agencée de manière à ce que les efforts exercés par ladite chaîne de mouillage (2) sur lesdits verrous (52) entrainent le déplacement de ladite pièce d'appui et la mise en pression de ladite chambre,
- au moins un capteur de pression (8) configuré pour mesurer la pression du liquide dans ladite chambre fermée (6).

2. Dispositif selon la revendication 1, dans lequel les verrous (52) agissent directement sur la pièce d'appui (7, 7'), cette dernière étant configurée pour reporter, sur la paroi (63) de l'enveloppe de la chambre (6) fermée déformable, les efforts exercés par la chaîne de mouillage (2) sur lesdits verrous.

3. Dispositif selon l'une des revendications 1 ou 2, dans lequel l'enveloppe de la chambre (6) est plus épaisse au niveau de la paroi (63) sur laquelle agit la pièce d'appui (7, 7').

4. Dispositif selon l'une des revendications 1 à 3, dans lequel l'enveloppe de la chambre (6) fermée déformable se présente sous la forme d'un corps annulaire fermé disposé à l'intérieur ou autour du conduit (53) du boîtier de verrouillage (50) de manière à ce que l'axe (T) dudit corps soit coaxial à l'axe (A) dudit conduit.

5. Dispositif selon l'une des revendications 1 à 3, dans lequel l'enveloppe de la chambre (6) fermée déformable se présente sous la forme d'un corps annulaire ouvert disposé à l'intérieur ou autour du conduit (53) du boîtier de verrouillage (50) de manière à ce que l'axe (T) dudit corps annulaire soit coaxial à l'axe (A) dudit conduit, l'ouverture (61) dudit corps annulaire étant dimensionnée pour autoriser le passage d'un maillon de la chaîne de mouillage (2).

6. Dispositif selon l'une des revendications 4 ou 5, dans lequel l'enveloppe de la chambre (6) fermée déformable est plate, la hauteur (h) de la section du corps annulaire étant inférieure à la largeur (I) de ladite section.

7. Dispositif selon l'une des revendications 1 à 3, dans lequel l'enveloppe de la chambre (6) est formée par deux tôles embouties (6a, 6b) identiques, présentant chacune un épaulement interne (Eᵢ) et un épaulement externe (Eₑ), ladite chambre étant obtenue en agençant les deux tôles (6a, 6b) en vis-à-vis et en soudant et/ou en rivetant les épaulements internes (Eᵢ) et externes (Eₑ).

8. Dispositif selon l'une des revendications 1 à 7, dans lequel la pièce d'appui (7) se déplace dans le boîtier de verrouillage (50) de manière à exercer, sur la paroi (63) de l'enveloppe de la chambre fermée (6), un effort de pression orienté selon une direction parallèle à l'axe (T) du conduit (53).

9. Dispositif selon l'une des revendications 1 à 7, dans lequel la pièce d'appui (7') se déplace dans le boîtier de verrouillage (50) de manière à exercer, sur la paroi (63) de l'enveloppe de la chambre fermée (6), un effort de pression orienté selon une direction perpendiculaire à l'axe (T) du conduit (53).

10. Dispositif selon l'une des revendications précédentes, dans lequel au moins trois points de mesure de la pression sont répartis de manière homogène sur la paroi (63) de l'enveloppe de la chambre (6) fermée déformable.

11. Dispositif selon l'une des revendications précédentes, dans lequel le l'enveloppe de la chambre (6) fermée déformable comprend au moins un évent (62) pour dégazer ladite chambre lors de son remplissage par le liquide.

12. Dispositif selon l'une des revendications précédentes, dans lequel la chambre (6) est remplie avec un liquide sous pression de manière à maintenir une pression résiduelle dans ladite chambre après son remplissage.

13. Dispositif selon l'une des revendications précédentes, dans lequel le moyen de mesure comprend plusieurs chambres constituées d'enveloppes fermées déformables, chacune des enveloppes de ces chambres se présentant sous la forme d'une portion de corps annulaire disposée à l'intérieur ou autour du conduit (53) du boîtier (50).

14. Système d'amarrage en mer d'une structure flottante (1) comprenant :
- au moins une chaîne de mouillage (2) destinée à former connexion entre ladite structure flottante (1) et un point d'ancrage (3) dans le fond marin,
- un dispositif arrêt de chaîne (5) positionné sur ladite structure flottante, ledit dispositif comportant un boîtier de verrouillage (50) pourvu d'un conduit (53) à l'intérieur duquel ladite chaîne de mouillage coulisse, ledit boîtier étant relié à ladite structure flottante par un moyen de liaison (51) configuré pour orienter l'axe (T) dudit conduit dans l'axe de tension (A) de ladite chaîne, ledit boîtier intégrant des verrous (52) s'opposant au coulissement de ladite chaîne dans ledit conduit,
- un moyen pour mesurer la tension dans ladite chaîne de mouillage, ledit moyen de mesure étant associé audit boîtier de verrouillage,
**se caractérisant par le fait que** ledit moyen de mesure comprend :
- au moins une chambre (6) constituée d'une enveloppe fermée déformable, laquelle chambre est remplie d'un liquide,
- au moins une pièce d'appui (7, 7') montée mobile dans ledit boîtier de verrouillage (50), ladite pièce d'appui étant placée entre les verrous (52) et la chambre (6), ladite pièce d'appui agissant sur la paroi (63) de l'enveloppe de ladite chambre pour mettre en pression le liquide qu'elle contient, ladite pièce d'appui étant agencée de manière à ce que les efforts exercés par ladite chaîne de mouillage (2) sur lesdits verrous (52) entrainent le déplacement de ladite pièce d'appui et la mise en pression de ladite chambre,
- au moins un capteur de pression (8) configuré pour mesurer la pression du liquide dans ladite chambre fermée (6).

15. Système selon la revendication 14, dans lequel les verrous (52) agissent directement sur la pièce d'appui (7), cette dernière étant configurée pour reporter, sur la paroi (63) de l'enveloppe de la chambre (6) fermée déformable et dans l'axe de tension de la chaîne de mouillage (2), les efforts exercés par ladite chaîne sur lesdits verrous.

## Patentansprüche

1. Vorrichtung zum Stoppen einer Vertäuungskette, umfassend:
- ein Verriegelungsgehäuse (50), das mit einer Durchführung (53) ausgestattet ist, in deren Innerem eine Vertäuungskette (2) geeignet ist, zu gleiten, wobei das Gehäuse ein Mittel zur Verbindung (51) an eine schwimmfähige Struktur (1) aufweist, die konfiguriert ist, um die Achse (T) der Durchführung in der Spannungsachse (A) der Kette auszurichten, wobei das Gehäuse Riegel (52) aufweist, die konfiguriert sind, um dem Gleiten der Kette in der Durchführung entgegenzuwirken,
- ein Mittel zum Messen der Spannung in der Vertäuungskette, wobei das Mittel zum Messen in dem Verriegelungsgehäuse integriert ist,
**dadurch gekennzeichnet, dass** das Mittel zum Messen Folgendes aufweist:
- mindestens eine Kammer (6), die aus einer verformbaren, geschlossenen Hülle gebildet ist, wobei die Kammer mit einer Flüssigkeit gefüllt ist,
- mindestens ein Auflagestück (7, 7'), das beweglich in dem Verriegelungsgehäuse (50) angeordnet ist, wobei das Auflagestück zwischen den Riegeln (52) und der Kammer (6) angeordnet ist, wobei das Auflagestück auf die Wand (63) der Hülle der Kammer einwirkt, um die Flüssigkeit, die sie enthält, unter Druck zu setzen, wobei das Auflagestück derart angeordnet ist, dass die Kräfte, die von der Vertäuungskette (2) auf die Riegel (52) ausgeübt werden, zu dem Verschieben des Auflagestücks und dem Unterdrucksetzen der Kammer führen,
- mindestens einen Drucksensor (8), der konfiguriert ist, um den Druck der Flüssigkeit in der geschlossenen Kammer (6) zu messen.

2. Vorrichtung nach Anspruch 1, wobei die Riegel (52) direkt auf das Auflagestück (7, 7') einwirken, wobei dieses Letztere konfiguriert ist, um auf die Wand (63) der verformbaren, geschlossenen Hülle der Kammer (6) die Kräfte zu übertragen, die von der Vertäuungskette (2) auf die Riegel ausgeübt werden.

3. Vorrichtung nach einem der Ansprüche 1 oder 2, wobei die Hülle der Kammer (6) an der Wand (63), auf die das Auflagestück (7, 7') einwirkt, dicker ist.

4. Vorrichtung nach einem der Ansprüche 1 bis 3, wobei die verformbare, geschlossene Hülle der Kammer (6) die Form eines geschlossenen, ringförmigen Körpers aufweist, der im Inneren der oder um die Durchführung (53) des Verriegelungsgehäuses (50) derart angeordnet ist, dass die Achse (T) des Körpers zu der Achse (A) der Durchführung koaxial ist.

5. Vorrichtung nach einem der Ansprüche 1 bis 3, wobei die verformbare, geschlossene Hülle der Kammer (6) die Form eines offenen, ringförmigen Körpers aufweist, der im Inneren der oder um die Durchführung (53) des Verriegelungsgehäuses (50) derart angeordnet ist, dass die Achse (T) des ringförmigen Körpers zu der Achse (A) der Durchführung koaxial ist, wobei die Öffnung (61) des ringförmigen Körpers dimensioniert ist, um den Durchgang eines Kettengliedes der Vertäuungskette (2) zu gewährleisten.

6. Vorrichtung nach einem der Ansprüche 4 oder 5, wobei die verformbare, geschlossene Hülle der Kammer (6) flach ist, wobei die Höhe (h) des Querschnitts des ringförmigen Körpers niedriger als die Breite (1) des Querschnitts ist.

7. Vorrichtung nach einem der Ansprüche 1 bis 3, wobei die Hülle der Kammer (6) durch zwei identische gepresste Bleche (6a, 6b) gebildet ist, die jeweils eine innere Schulter (Eᵢ) und eine äußere Schulter (Eₑ) aufweisen, wobei die Kammer erhalten wird, indem die zwei Bleche (6a, 6b) einander gegenüber angeordnet werden und indem die inneren (Eᵢ) und äußeren Schultern (Eₑ) verschweißt und/oder vernietet werden.

8. Vorrichtung nach einem der Ansprüche 1 bis 7, wobei sich das Auflagestück (7) in dem Verriegelungsgehäuse (50) derart verschiebt, dass es auf die Wand (63) der Hülle der geschlossenen Kammer (6) eine Druckkraft ausübt, die in einer Richtung orientiert ist, die parallel zu der Achse (T) der Durchführung (53) ist.

9. Vorrichtung nach einem der Ansprüche 1 bis 7, wobei sich das Auflagestück (7') in dem Verriegelungsgehäuse (50) derart verschiebt, dass es auf die Wand (63) der Hülle der geschlossenen Kammer (6) eine Druckkraft ausübt, die in einer Richtung orientiert ist, die senkrecht zu der Achse (T) der Durchführung (53) ist.

10. Vorrichtung nach einem der vorhergehenden Ansprüche, wobei mindestens drei Druckmesspunkte gleichmäßig auf der Wand (63) der verformbaren, geschlossenen Hülle der Kammer (6) verteilt sind.

11. Vorrichtung nach einem der vorhergehenden Ansprüche, wobei die verformbare, geschlossene Hülle der Kammer (6) mindestens eine Entlüftungsöffnung (62) zum Entgasen der Kammer während ihres Befüllens mit der Flüssigkeit aufweist.

12. Vorrichtung nach einem der vorhergehenden Ansprüche, wobei die Kammer (6) mit einer Flüssigkeit unter Druck befüllt wird, um in der Kammer nach ihrem Befüllen einen Restdruck beizubehalten.

13. Vorrichtung nach einem der vorhergehenden Ansprüche, wobei das Mittel zum Messen mehrere Kammern aufweist, die aus verformbaren, geschlossenen Hüllen gebildet sind, wobei jede der Hüllen dieser Kammern die Form eines ringförmigen Körperabschnitts aufweist, der im Inneren der oder um die Durchführung (53) des Gehäuses (50) angeordnet ist.

14. System zur Offshore-Vertäuung einer schwimmfähigen Struktur (1), umfassend:
- mindestens eine Vertäuungskette (2), die dazu bestimmt ist, eine Verbindung zwischen der schwimmfähigen Struktur (1) und einem Verankerungspunkt (3) in dem Meeresboden zu erstellen,
- eine Vorrichtung zum Stoppen einer Kette (5), die auf der schwimmfähigen Struktur angeordnet ist, wobei die Vorrichtung ein Verriegelungsgehäuse (50) aufweist, das mit einer Durchführung (53) ausgestattet ist, in deren Innerem die Vertäuungskette gleitet, wobei das Gehäuse mit der schwimmfähigen Struktur durch ein Mittel zur Verbindung (51) verbunden ist, das konfiguriert ist, um die Achse (T) der Durchführung in der Spannungsachse (A) der Kette auszurichten, wobei das Gehäuse Riegel (52) aufweist, die dem Gleiten der KeLte in der Durchführung entgegenwirken,
- ein Mittel zum Messen der Spannung in der Vertäuungskette, wobei das Mittel zum Messen mit dem Verriegelungsgehäuse verbunden ist,
**dadurch gekennzeichnet, dass** das Mittel zum Messen Folgendes aufweist:
- mindestens eine Kammer (6), die aus einer verformbaren, geschlossenen Hülle gebildet ist, wobei die Kammer mit einer Flüssigkeit gefüllt ist,
- mindestens ein Auflagestück (7, 7`), das beweglich in dem Verriegelungsgehäuse (50) angeordnet ist, wobei das Auflagestück zwischen den Riegeln (52) und der Kammer (6) angeordnet ist, wobei das Auflagestück auf die Wand (63) der Hülle der Kammer einwirkt, um die Flüssigkeit, die sie enthält, unter Druck zu setzen, wobei das Auflagestück derart angeordnet ist, dass die Kräfte, die von der Vertäuungskette (2) auf die Riegel (52) ausgeübt werden, zu dem Verschieben des Auflagestücks und dem Unterdrucksetzen der Kammer führen,
- mindestens einen Drucksensor (8), der konfiguriert ist, um den Druck der Flüssigkeit in der geschlossenen Kammer (6) zu messen.

15. System nach Anspruch 14, wobei die Riegel (52) direkt auf das Auflagestück (7) einwirken, wobei dieses Letztere konfiguriert ist, um auf die Wand (63) der verformbaren, geschlossenen Hülle der Kammer (6) und in die Spannungsachse der Vertäuungskette (2) die Kräfte zu übertragen, die von der Kette auf die Riegel ausgeübt werden.

## Claims

1. Anchor chain stopper device comprising:
- a locking casing (50) provided with a duct (53) in which an anchor chain (2) is able to slide, said casing comprising a link means (51) to a floating structure (1) configured to orient the axis (T) of said duct in the axis of tension (A) of said chain, said casing incorporating locks (52) configured to oppose the sliding of said chain in said duct,
- a means for measuring the tension in said anchor chain, said measurement means being incorporated in said locking casing,
**characterized in that** said measurement means comprises:
- at least one chamber (6) consisting of a closed deformable enclosure, said chamber being filled with a liquid,
- at least one bearing piece (7, 7') movably mounted in the locking casing (50), said bearing piece being placed between the locks (52) and the chamber (6), said bearing piece acting on the wall (63) of the enclosure of said chamber to pressurize the liquid that it contains, said bearing piece being arranged in such a way that the loads exerted by said anchor chain (2) on said locks (52) drive the displacement of said bearing piece and the pressurization of said chamber,
- at least one pressure sensor (8) configured to measure the pressure of the liquid in said closed chamber (6).

2. Device according to Claim 1, in which the locks (52) act directly on the bearing piece (7, 7'), the latter being configured to transfer, to the wall (63) of the enclosure of the closed deformable chamber (6), the loads exerted by the anchor chain (2) on said locks.

3. Device according to one of Claims 1 or 2, in which the enclosure of the chamber (6) is thicker at the level of the wall (63) on which the bearing piece (7, 7') acts.

4. Device according to one of Claims 1 to 3, in which the enclosure of the closed deformable chamber (6) takes the form of a closed annular body arranged in or around the duct (53) of the locking casing (50) so that the axis (T) of said body is coaxial to the axis (A) of said duct.

5. Device according to one of Claims 1 to 3, in which the enclosure of the closed deformable chamber (6) takes the form of an open annular body arranged in or around the duct (53) of the locking casing (50) so that the axis (T) of said annular body is coaxial to the axis (A) of said duct, the opening (61) of said annular body being dimensioned to allow the passage of a link of the anchor chain (2).

6. Device according to one of Claims 4 or 5, in which the enclosure of the closed deformable chamber (6) is flat, the height (h) of the section of the annular body being less than the width (1) of said section.

7. Device according to one of Claims 1 to 3, in which the enclosure of the chamber (6) is formed by two identical stamped plates (6a, 6b), each having an inner shoulder (Eᵢ) and an outer shoulder (Eₑ), said chamber being obtained by arranging the two plates (6a, 6b) facing one another and by welding and/or riveting the inner (Eᵢ) and outer (Eₑ) shoulders.

8. Device according to one of Claims 1 to 7, in which the bearing piece (7) is displaced in the locking casing (50) so as to exert, on the wall (63) of the enclosure of the closed chamber (6), a pressure load oriented in a direction parallel to the axis (T) of the duct (53).

9. Device according to one of Claims 1 to 7, in which the bearing piece (7') is displaced in the locking casing (50) so as to exert, on the wall (63) of the enclosure of the closed chamber (6), a pressure load oriented in a direction at right angles to the axis (T) of the duct (53).

10. Device according to one of the preceding claims, in which at least three pressure measurement points are distributed uniformly over the wall (63) of the enclosure of the closed deformable chamber (6).

11. Device according to one of the preceding claims, in which the enclosure of the closed deformable chamber (6) comprises at least one vent (62) for degassing said chamber when it is being filled with liquid.

12. Device according to one of the preceding claims, in which the chamber (6) is filled with a liquid under pressure so as to maintain a residual pressure in said chamber after it has been filled.

13. Device according to one of the preceding claims, in which the measurement means comprises a number of chambers consisting of closed deformable enclosures, each of the enclosures of these chambers taking the form of a portion of annular body arranged in or around the duct (53) of the casing (50).

14. Offshore mooring system for a floating structure (1) comprising:
- at least one anchor chain (2) intended to form the connection between said floating structure (1) and an anchoring point (3) in the seabed,
- a chain stopper device (5) positioned on said floating structure, said device comprising a locking casing (50) provided with a duct (53) within which said anchor chain slides, said casing being linked to said floating structure by a link means (51) configured to orient the axis (T) of said duct in the axis of tension (A) of said chain, said casing incorporating locks (52) opposing the sliding of said chain in said duct,
- a means for measuring the tension in said anchor chain, said measurement means being associated with said locking casing,
**characterized in that** said measurement means comprises:
- at least one chamber (6) consisting of a closed deformable enclosure, said chamber being filled with a liquid,
- at least one bearing piece (7, 7') movably mounted in said locking casing (50), said bearing piece being placed between the locks (52) and the chamber (6), said bearing piece acting on the wall (63) of the enclosure of said chamber to pressurize the liquid that it contains, said bearing piece being arranged so that the loads exerted by said anchor chain (2) on said locks (52) drive the displacement of said bearing piece and the pressurization of said chamber,
- at least one pressure sensor (8) configured to measure the pressure of the liquid in said closed chamber (6).

15. System according to Claim 14, in which the locks (52) act directly on the bearing piece (7), the latter being configured to transfer, to the wall (63) of the enclosure of the closed deformable chamber (6) and in the axis of tension of the anchor chain (2), the loads exerted by said chain on said locks.
